# EUROPÄISCHE PATENTSCHRIFT

(11) **EP 2 243 664 B1**
(45) Veröffentlichungstag und Bekanntmachung des Hinweises auf die Patenterteilung: **20.02.2013**
(21) Anmeldenummer: 10157483.8
(22) Anmeldetag: 24.03.2010
(51) Int. Cl.: B60R 1/06

(54) **Spiegelfuß**
Mirror base
Pied de miroir

(30) Priorität: 20.04.2009 DE 102009019091
(43) Veröffentlichungstag der Anmeldung: 27.10.2010
(73) Patentinhaber: SMR Patents S.à.r.l., 1653 Luxembourg (LU)
(72) Erfinder: Schmierer, Arne, 73230, Kirchheim (DE)
(74) Vertreter: Weber-Bruls, Dorothée

(56) Entgegenhaltungen:
- DE-A1- 1 952 364
- DE-A1- 2 612 631
- DE-A1- 4 323 534
- DE-A1- 10 121 400
- US-A- 6 012 817

## Beschreibung

Die vorliegende Erfindung befasst sich mit einer Befestigungsvorrichtung mit einer Ausbildung eines Spiegelfußes, der auf groß ausgelegte metallische Spiegel-Bauteile verzichtet. Die erfindungsgemäßeBefestigungsvorrichtung mit Spiegelfuß weist eine neuartige Befestigung zur Stabilitätserzeugung auf.

### Stand der Technik:

Im Stand der Technik werden Spiegelfüße aus Druckguss hergestellt. Diese metallischen Bauteile sind in der Lage die auftretenden Kräfte aufzunehmen und eine verbindungssteife Verbindung zwischen Fahrzeug und Spiegelkopf herzustellen. Metallische Druckgussbauteile in der benötigten Komplexität und Präzision herzustellen ist nicht einfach. Zudem sind metallische Spiegelfüße schwer und erhöhen somit das Gewicht des Gesamtfahrzeugs und somit den CO2 Ausstoß.

Es sind auch Spiegelfüße aus Kunststoff bekannt. In der Veröffentlichung Plastikverarbeiter 53, 2002 Nr. 10 Seite 136-138 wird beschrieben, wie die bisher aus Aluminium bestehenden Spiegelträgerfuß durch einen Fuß aus Ultradur B 4040 G10 ersetzen werden. Ermöglicht wurde dies vor allem durch den hohen E-Modul von etwa 19 000 N/mm², der zur vibrationsarmen Lagerung des Rückspiegels und damit zu einer ungestörten Sicht beiträgt. Gerade Außenspiegel kommen bei der Fahrt des Automobils öfter mit Hindernissen in Berührung und müssen schlagartige Beanspruchung unbeschadet überstehen. Die hohe Schlagzähigkeit des Materials hilft diese Schläge unbeschadet zu ertragen. Auf die bisher erforderliche aufwendige Nacharbeit der Aluminiumteile kann verzichtet werden. Hinzu kommen eine Kosteneinsparungen sowie ein Gewichtsvorteil von ungefähr 60%.

Aus der DE 8111782 U ist einen Spiegelkonstruktion mit einem mehrteiligen Spiegelfuß bekannt, in dem die Spiegelbasis mit einem Winkelstück verschraubt ist. Die Verschraubung dient dabei zur Verbindung der Bauteile und nicht zur Anbringung des Spiegelfußes an die Karosserie eines Fahrzeugs.

Ziel der Erfindung ist es, einen Spiegelfuß unter Einbeziehung einer Befestigung bereitzustellen, der eine wesentliche Gewichtsreduktion ermöglicht und die Montage vereinfacht. Der mindestens teilweise aus Kunststoff gespritzte Spiegelfuß reduziert das Gewicht des gesamten Außenspiegels drastisch. Der erfindungsgemäße Spiegelfuß weist zudem Befestigungsschrauben auf, die zusammen mit dem Kunststoffspiegelfuß die erforderliche Präzision und Verwindungssteifigkeit herstellen. Weitere Vorteile und Ausführungen werden in der folgenden Beschreibung dargelegt.

### Beschreibung der Erfindung:

Figur 1 zeigt einen Außenspiegel im Stand der Technik.
Figur 2 zeigt einen erfindungsgemäßen Kunststoffspiegelfuß
Figur 3 zeigt den erfindungsgemäßen Spiegelfuß mit Gewindekörper.
Figur 4 zeigt einen erfindungsgemäßen Spiegelfuß mit Anlagefläche.
Figur 5 zeigt eine Aufsicht von oben auf den erfindungsgemäßen Spiegelfuß.
Figur 6 zeigt einen Längsschnitt durch den erfindungsgemäßen Spiegelfuß.
Figur 7 zeigt einen Spiegelfuß mit reduzierten Schenkeln.

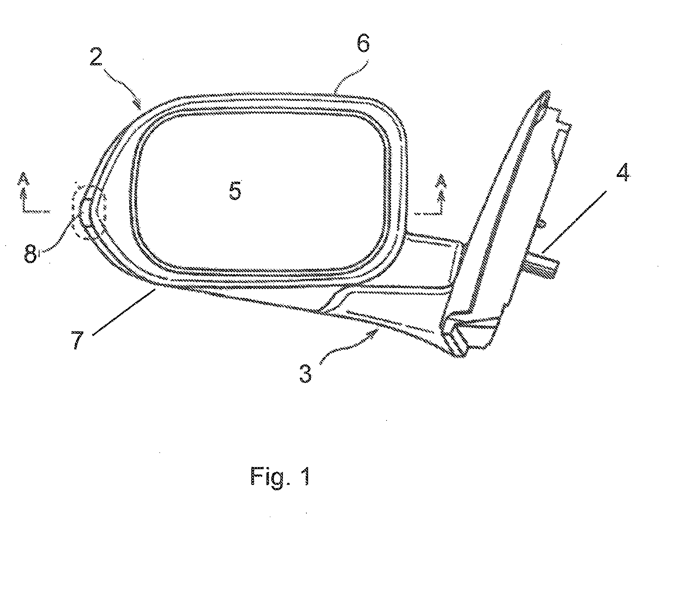

Außenspiegel werden im Stand der Technik wie nach Figur 1 beispielhaft dargestellt, aus einem Spiegelkopf 2 und einem Spiegelfuß mit Spiegelfußverkleidung 3 aufgebaut. Der Außenspiegel ist über den Spiegelfuß, der in dieser Zeichnung innerhalb der Verkleidung 3 liegt, mit dem Fahrzeug verbunden und weist eine drehbare Verbindung für den Spiegelkopf 2 auf. Der Spiegelkopf ist beispielhaft mit einem Spiegelrahmen 7 versehen, der eine spiegelnde Glasfläche umfasst. In diesem Beispiel weist der Außenspiegel auch noch ein Blinkermodul 8 auf. Der Spiegelfuß ist über Befestigungen 4 mit dem Fahrzeug verschraubt. Die Kunststoffteile des Spiegelgehäuses 6 sowie der Spiegelfußverkleidung 3 umgeben im Stand der Technik metallische Bauteile, die aus dem Spiegelfuß und einer Trägerplatte im Spiegelkopf bestehen und in der Zeichnung nicht sichtbar sind.

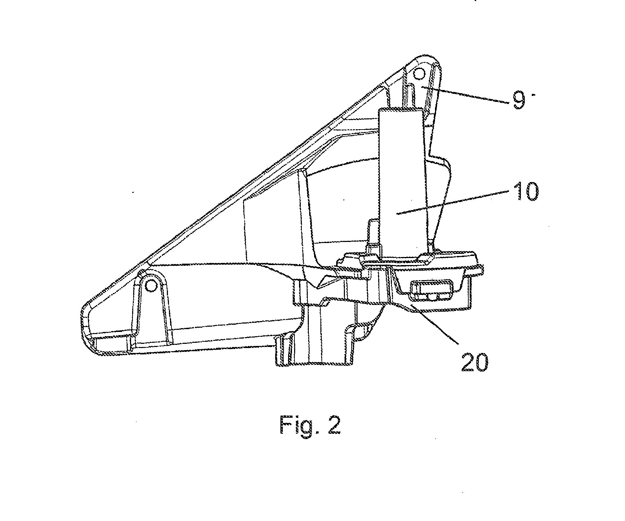

Figur 2 zeigt beispielhaft einen Spiegelfuß in der Aufsicht auf das Fahrzeug hin, wie er im Stand der Technik aus Druckguss hergestellt wird. Das Bauteil weist verschiedene Rippen auf, die die Stabilität herstellen, ohne dass zuviel Material verwendet wird. Der Spiegelfuß weist vom Fahrzeug weg, einen Träger 20 für eine Drehachse 10 für eine manuelle oder motorische Verdrehung des Spiegelkopfes auf. Dieses Gelenk muss durch das Material des Spiegelfußes hinreichend gestützt sein. Der Spiegelfuß 9 zeigt auf der Rückseite, dem Fahrzug zugewandt, Schraubdome, mit denen der Spiegelfuß am Fahrzeug verschraubt wird.
Es gibt zunehmend Bestrebungen in der Serie wenigstens einen Teil der metallischen Bauteile durch stabile Kunststoffe zu ersetzen. Trägerplatten im Spiegelkopf werden daher schon aus Kunststoff hergestellt, aber auch Spiegelfußstrukturen.

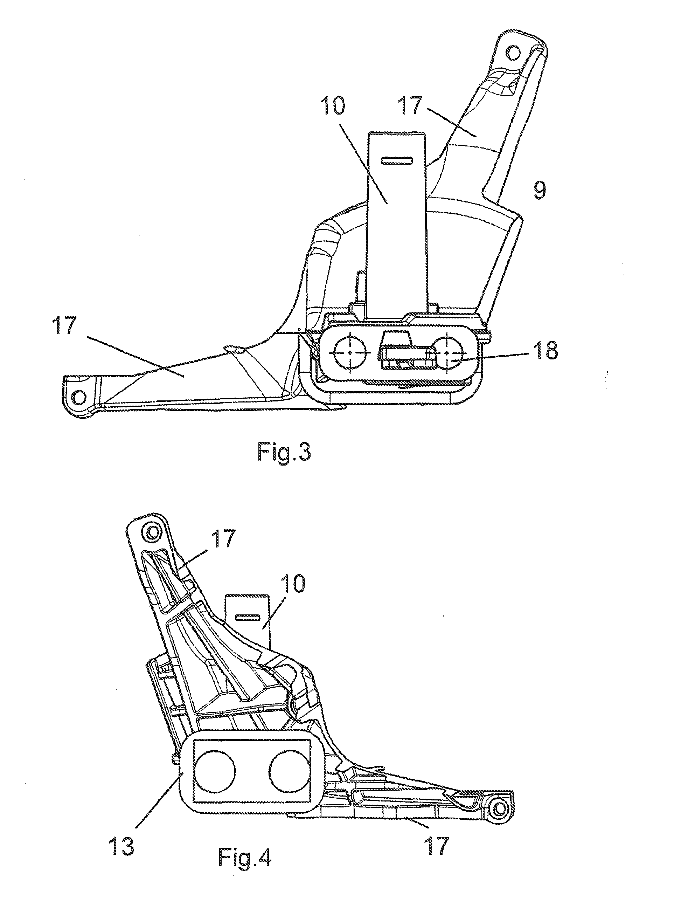

Der erfindungsgemäße Spiegelfuß nach Figur 3 ist in einer Ausführungsform aus einem Kunststoffteil einstückig gespritzt. Der Spiegelfuß ist in Figur 3 in einer Sicht von außen auf die Fahrzeugaußenseite dargestellt. In der Ausführungsform nach Figur 3 weist der Spiegelfuß eine Grundfläche auf, die in Form zweier Schenkel 17 am Fahrzeug anliegt. Die beiden Schenkel enden in Ösen, die zum Verschrauben der Spiegelfußverkleidung dienen. Sie sind für die Ausführung der Erfindung nicht von Bedeutung. Der Spiegelfuß 9 weist in seiner Verlängerung in Richtung vom Fahrzeug weg eine Trägerstruktur 20 und eine Achse 10 zur Aufnahme des drehbaren Spiegelkopfes auf.
Weiterhin ist stirnseitig als Abschluß der Trägerstruktur 20 zum Spiegelkopf hin, ein Gewindekörper 18 zu erkennen, der in dieser Ausführungsform als getrenntes Bauteil skizziert ist.

Figur 4 zeigt denselben Spiegelfußwie Figur 3 von seiner Fahrzeugseite her. Man erkennt eine Anlagefläche 13 für die Durchführung der Verschraubung.

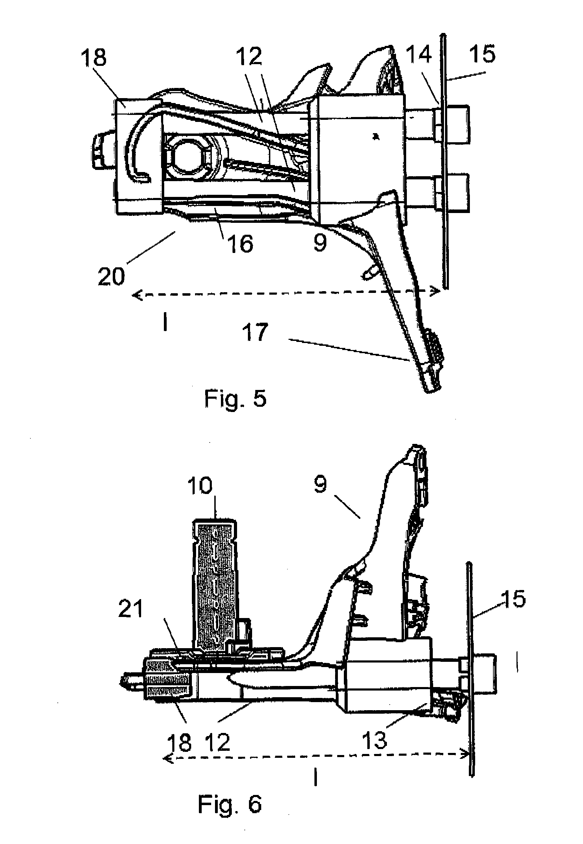

Figur 5 zeigt den erfindungsgemäßen Spiegelfuß von unten. Zwei Befestigungsschrauben 12 werden durch den Spiegelfuß 9 geführt. Die Anlagefläche 13 befindet sich dabei fahrzeugseitig und dient als Aufnahme der Schraubenköpfe 14. Die Schrauben 12 verlaufen längs entlang des gesamten Spiegelfußes, wobei im Spiegelfuß Strukturen ausgebildet sind, in denen die Schrauben geführt werden. Beispielsweise sind Rinnen 16 ausgebildet, an denen die Schrauben anliegen. Der Gewindekörper 18 nimmt die Schrauben endseitig auf und beinhaltet ein Gewinde in dem die Schrauben arretiert werden können. Der Abstand der beiden Schrauben ist dabei maximal gewählt und entspricht der Breite b des Spiegelfußes im Bereich der Drehachse 10.

Sowohl Gewindekörper 18 als auch die Anlagefläche 13 sind in einer vorteilhaften Ausführungsform direkt mit dem Spiegelfuß aus einem Material gespritzt.
Figur 6 zeigt einen Längsschnitt des erfindungsgemäßen Spiegelfußes. Die Schraube 12 führt vom Fahrzeug 15 durch die Anlagefläche 13 über den Spiegelfuß 9 in den Gewindekörper 18, in dem sie verschraubt wird. Die Schrauben 12 tragen den gesamten Spiegelfuß und somit den gesamten Außenspiegel. Die Länge der Schrauben entspricht der Länge I des Spiegelfußes 9.
Die Schrauben erstrecken sich bis unterhalb der Drehachse 10.

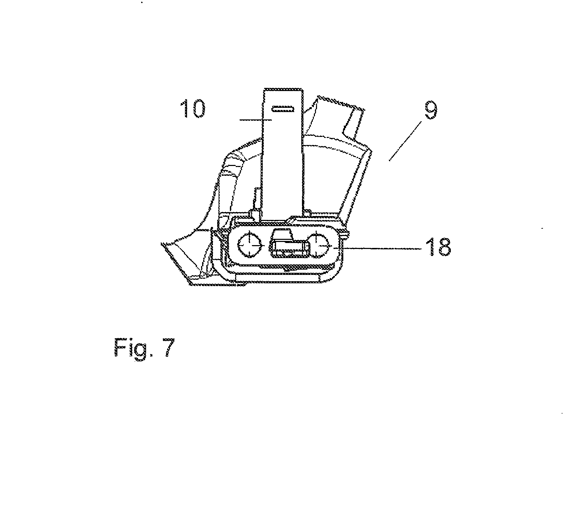

Figur 7 zeigt einen weiter reduzierte Spiegelfußlösung, deren Schenkel 17 auf ein Minimum ausgelegt sind.

Die erfindungsgemäße Lösung stellt sich als eine Kombination aus Materialien dar. Das leichte Kunststoffmaterial allein wäre nicht in der Lage einen schweren Spiegelkopf zu tragen. Das Material würde nicht die notwendige Steifigkeit und Vibrationsfestigkeit aufweisen, die erforderlich ist. Daher werden Stahlschrauben 12 eingesetzt, um die die notwendige Elastizität aber auch Steifigkeit zu erreichen. Da Außenspiegel sowieso an das Fahrzeug geschraubt werden ist der Einsatz von speziellen Schrauben, die in ihrer Länge den Spiegelfuß tragen, ein Schritt zu einer kostengünstige Lösung. Die Länge der Schrauben wird so dimensioniert, dass sie den gesamten Spiegelfuß entlang verlaufen. Der Gewindekörper 18 an der Außenseite des Spiegelfußes wird entweder aus Metall hergestellt oder ebenfalls in Kunststoff gespritzt wobei für die Verschraubung eventuell durch metallische Einsätze verbessert werden kann. Die erfindungsgemäße Lösung reduziert den baulichen Aufwand für die Herstellung und Montage eines Spiegelfußes erheblich. Die Lösung reduziert das Gesamtgewicht bei einer einfachen und kostengünstigen Befestigungsform.

Ein weitere Ausführungsformverwendet für den Spiegelfuß Kunststoff, aber für die Herstellung der Drehachse 10 und deren Basis am Spiegelfuß Druckguss- Material.
Dabei kann die Drehachse mit Basis 21 sowie der Gewindekörper 18 aus einem Druckgussteil hergestellt sein, wie in Figur 6 durch graue Hinterlegung angedeutet.

Der gesamte Spiegelfuß 9 wird in Kombination der Materialen optimiert. Die Anlagefläche 13 und der Gewindekörper 18 sind alternativ in Druckguss oder Kunststoff hergestellt. Die Wahl des Material wird von der Dimension des Spiegelfußes bestimmt und den Anforderungen bezüglich seiner Vibrationsfestigkeit.

Der wichtige Bestandteil des Materialmix sind die Befestigungsschrauben. Die Erfindung ist dabei nicht auf einen Ausführung mit zwei Schrauben begrenzt, es können auch mehrerer Schrauben oder eine einzelne Schraube zum Einsatz kommen.

## Patentansprüche

1. Befestigungsvorrichtung für einen Fahrzeugaußenspiegel mit einem Spiegelfuß (9) bestehend aus einer fahrzeugseitigen Anlagefläche (13) und einem Träger (20) für eine Drehachse (10) auf der ein Spiegelkopf drehbar gelagert ist, wobei der Spiegelfuß (9) Vorrichtungen (13,18, 16) zur Aufnahme mindestens einer Schraube (12) für die Befestigung des Spiegelfußes an der Karosserie des Fahrzeugs aufweist, **dadurch gekennzeichnet, dass**
sich jede Schraube (12) entlang der gesamten Länge des mindestens teilweise aus Kunststoff gespritzten Spiegelfußes bis unterhalb der Drehachse (10) vom Fahrzeug weg erstreckt.

2. Befestigungsvorrichtung nach Anspruch 1 **dadurch gekennzeichnet, dass** die Vorrichtungen zur Aufnahme der mindestens einen Schraube (12) sich über die Breite (b) des Spiegelfußes im Bereich der Drehachse (10) erstrecken.

3. Befestigungsvorrichtung nach Anspruch 1 **dadurch gekennzeichnet, dass** die Vorrichtungen zur Aufnahmen der Schraube (12) mindestens teilweise aus zusätzlichen Bauteilen (18, 13) bestehen.

4. Befestigungsvorrichtung nach Anspruch 1 **dadurch gekennzeichnet, dass** die Vorrichtungen zur Aufnahme der Schraube (13,18) zusammen mit dem Spiegelfuß einstückig hergestellt sind.

5. Befestigungsvorrichtung nach Anspruch 1 **dadurch gekennzeichnet, dass** die Vorrichtungen zur Aufnahme der Schraube (13,18) mit Metalleinsätze verstärkt sind.

6. Befestigungsvorrichtung nach Anspruch 1 **dadurch gekennzeichnet, dass** der Spiegelfuß mit zwei Schrauben (12) am Fahrzeug verschraubbar ist.

7. Befestigungsvorrichtung nach Anspruch 1 **dadurch gekennzeichnet, dass** der gesamte Spiegelfuß mit den Aufnahmen (13, 18) einstückig aus Kunststoff hergestellt ist.

8. Befestigungsvorrichtung nach Anspruch 1 **dadurch gekennzeichnet, dass** die Drehachse (19) mit ihrer Basis (21) aus Druckguss hergestellt ist.

9. Befestigungsvorrichtung nach Anspruch 8 **dadurch gekennzeichnet, dass** der Gewindekörper (18) einstückig mit Basis (21) und Drehachse (10) hergestellt ist.

10. Befestigungsvorrichtung nach Anspruch 1 **dadurch gekennzeichnet, dass** zwei Schrauben (12) verwendet werden.

11. Befestigungsvorrichtung nach Anspruch 1 **dadurch gekennzeichnet, dass** einen Schraube (12) verwendet wird.

## Claims

1. A mounting device for an outside mirror of a vehicle, comprising a mirror base (9) consisting of a contact surface (13) facing the vehicle and a support (20) for a pivot (10) on which a mirror head is supported so as to be rotatable, wherein the mirror base (9) comprises devices (13, 18, 16) for receiving at least one screw (12) for mounting said mirror base to the body of the vehicle, **characterized in that** each screw (12) extends along the entire length (b) of the mirror base, at least part of which is injection-molded of plastic, away from the vehicle up to below the pivot (10).

2. The mounting device according to Claim 1, **characterized in that** the devices for receiving the at least one screw (12) extend across the width (b) of the mirror base in the area of the pivot (10).

3. The mounting device according to Claim 1, **characterized in that** at least part of the devices for receiving the screw (12) consists of additional components (18, 13).

4. The mounting device according to Claim 1, **characterized in that** the devices for receiving the screw (13, 18) are made in one piece with the mirror base.

5. The mounting device according to Claim 1, **characterized in that** the devices for receiving the screw (13, 18) are reinforced by means of metal inserts.

6. The mounting device according to Claim 1, **characterized in that** the mirror base can be screwed to the vehicle by means of two screws (12).

7. The mounting device according to Claim 1, **characterized in that** the entire mirror base including the receiving elements (13, 18) is made in one piece and is made of plastic.

8. The mounting device according to Claim 1, **characterized in that** the pivot (10) including its base (21) is made by high-pressure die casting.

9. The mounting device according to Claim 8, **characterized in that** the threaded body (18) is made in one piece with the base (21) and the pivot (10).

10. The mounting device according to Claim 1, **characterized in that** two screws (12) are used.

11. The mounting device according to Claim 1, **characterized in that** one screw (12) is used.

## Revendications

1. Dispositif de fixation pour un rétroviseur extérieur de véhicule, ayant une base de rétroviseur (09) constituée d'une surface d'installation (13) sur le côté du véhicule, et d'un support (20) pour un axe de rotation (10) sur lequel une tête de rétroviseur est agencée de manière rotative, de sorte que la base de rétroviseur (09) comporte des dispositifs (13, 18, 16) pour recevoir au moins un boulon (12) pour la fixation de la base de rétroviseur sur la carrosserie du véhicule,
**caractérisé en ce que** chaque boulon (12) s'étend loin du véhicule le long de toute la longueur de la base de rétroviseur recouverte par pulvérisation au moins en partie de matière plastique, jusqu'au-dessous de l'axe de rotation (10).

2. Dispositif de fixation selon la revendication 1, **caractérisé en ce que** les dispositifs pour recevoir le au moins boulon (12) s'étendent sur la largeur (b) de la base de rétroviseur dans la zone de l'axe de rotation (10).

3. Dispositif de fixation selon la revendication 1, **caractérisé en ce que** les dispositifs pour recevoir le boulon (12) sont constitués, au moins partiellement, de composants supplémentaires (18, 13).

4. Dispositif de fixation selon la revendication 1, **caractérisé en ce que** les dispositifs pour recevoir le boulon (13, 18) sont fabriqués en une seule pièce ensemble avec la base de rétroviseur.

5. Dispositif de fixation selon la revendication 1, **caractérisé en ce que** les dispositifs pour recevoir le boulon (13, 18) sont renforcés par des inserts métalliques.

6. Dispositif de fixation selon la revendication 1, **caractérisé en ce que** la base de rétroviseur peut-être boulonnée sur le véhicule à l'aide de deux boulons (12).

7. Dispositif de fixation selon la revendication 1, **caractérisé en ce que** la base de rétroviseur entière, avec les boulons reçus (13, 18), est fabriquée en une seule pièce en matière plastique.

8. Dispositif de fixation selon la revendication 1, **caractérisé en ce que** l'axe de rotation (19) est fabriqué avec sa base (21) par moulage sous pression.

9. Dispositif de fixation selon la revendication 8, **caractérisé en ce que** le corps fileté (18) est fabriqué en une seule pièce avec la base (21) et l'axe de rotation (10).

10. Dispositif de fixation selon la revendication 1, **caractérisé en ce que** deux boulons (12) sont utilisés.

11. Dispositif de fixation selon la revendication 1, **caractérisé en ce qu'**un boulon (12) est utilisé.
